# EUROPÄISCHE PATENTANMELDUNG

(11) **EP 4 744 852 A1**
(43) Veröffentlichungstag der Anmeldung: **20.05.2026**
(21) Anmeldenummer: 25208052.8
(22) Anmeldetag: 10.10.2025
(51) Int. Cl.: B29B 7/18, B29B 7/24, B29B 7/26, B29B 7/28, B29B 7/46, B29B 7/74, B29B 7/80

(54) **MISCHVORRICHTUNG ZUM MISCHEN UND VERARBEITEN EINER MISCHUNG UND VERFAHREN ZUM BETREIBEN EINER MISCHVORRICHTUNG**

(30) Priorität: 15.11.2024 DE 102024211018
(71) Anmelder: Continental Reifen Deutschland GmbH, 30175 Hannover (DE)
(72) Erfinder: Steiner, Frank Stefan, 30175 Hannover (DE); Raeggel, Kilian, 30175 Hannover (DE)
(74) Vertreter: Continental Corporation

(57) **Zusammenfassung**

Eine Mischvorrichtung (1) zum Mischen und Verarbeiten einer Mischung umfasst eine Mischkammer (2) mit einem ersten Mischkammerabschnitt (3) und einem zweiten Mischkammerabschnitt (4). Die Mischvorrichtung (1) umfasst weiter einen Klappsattel (5), der mit der Mischkammer (2) gekoppelt ist und der um eine Drehachse (R1) drehbar ausgebildet ist, sodass der Klappsattel (5) in einem geschlossenen Zustand einen Bodenabschnitt der Mischkammer (2) einrichtet und die beiden Mischkammerabschnitte (3, 4) abschnittsweise begrenzt, und in einem geöffneten Zustand einen Öffnungsbereich (7) der Mischkammer (2) zum Austreten der Mischung freigibt. Die Mischvorrichtung (1) umfasst außerdem eine Überwachungseinheit mit einer Sensorik (13), die dazu eingerichtet ist, den Öffnungsbereich (7) der Mischkammer (2) in dem geöffneten Zustand zu überwachen.

## Beschreibung

Die vorliegende Erfindung betrifft eine Mischvorrichtung zum Mischen und Verarbeiten einer Mischung und ein Verfahren zum Betreiben einer solchen Mischvorrichtung.

Fahrzeuge weisen Reifen auf, die üblicherweise ein Gummibauteil in Form eines Kautschuk-Reifenprofils haben. Bei der Herstellung von Reifen oder anderen Gummibauteilen ist stets eine Fertigung erstrebenswert, die eine kostengünstige und zudem zuverlässige Ausbildung des jeweiligen Produkts ermöglicht.

Es ist eine Aufgabe, die der Erfindung zugrunde liegt, eine Mischvorrichtung und ein Verfahren zum Betreiben einer Mischvorrichtung bereitzustellen, die jeweils zu einem kostengünstigen und effizienten Herstellen eines Reifens beitragen können.

Die Aufgabe wird durch die jeweiligen Merkmale der unabhängigen Patentansprüche gelöst. Vorteilhafte Weiterbildungen sind in den jeweils abhängigen Patentansprüchen angegeben.

Gemäß einem Aspekt der Erfindung umfasst eine Mischvorrichtung zum Mischen und Verarbeiten einer Mischung eine Mischkammer mit einem ersten Mischkammerabschnitt und einem zweiten Mischkammerabschnitt, die insbesondere als Mischkammerhälften realisiert sind. Die Mischvorrichtung umfasst weiter einen Klappsattel, der mit der Mischkammer gekoppelt ist und der um eine Drehachse drehbar ausgebildet ist, sodass der Klappsattel zwischen einem geschlossenen Zustand und einem geöffneten Zustand überführbar ist. In dem geschlossenen Zustand richtet der Klappsattel einen Bodenabschnitt der Mischkammer ein und begrenzt die beiden Mischkammerabschnitte abschnittsweise. Indem der Klappsattel um die Drehachse gedreht wird, wird die Mischkammer geöffnet und der geöffnete Zustand des Klappsattels ausgebildet, in dem ein Öffnungsbereich der Mischkammer zum Austreten der Mischung freigegeben ist. Die Mischvorrichtung umfasst außerdem eine Überwachungseinheit mit einer Sensorik, die dazu eingerichtet ist, den Öffnungsbereich der Mischkammer in dem geöffneten Zustand des Klappsattels zu überwachen. Die Sensorik kann ferner dazu eingerichtet sein, den Bereich der Öffnung der Mischkammer auch in dem geschlossenen Zustand des Klappsattels zu überwachen.

Mittels der beschriebenen Vorrichtung kann zu einem verbesserten Verarbeitungsprozess einer Mischung beigetragen werden, welche insbesondere als eine Reifen- oder Kautschuk-Mischung für ein Gummibauteil realisiert sein kann. Somit kann zu einem zeitsparenden und kostengünstigen Herstellungsprozess eines Reifens für ein Kraftfahrzeug beigetragen werden. Die Überwachungseinheit ermöglicht ein automatisiertes Überwachen des Öffnungsbereichs, sodass zuverlässig kontrolliert werden kann, ob die verarbeitete Mischung die Mischkammer verlassen hat oder ob noch Anteile heraustreten. Somit kann ein unnötiges und zeitaufwändiges Beibehalten des geöffneten Zustands verhindert werden und der Klappsattel zeitnah gesteuert werden, um wieder den geschlossenen Zustand auszubilden und mit einem weiteren Mischprozess zu beginnen.

Die Mischvorrichtung ist üblicherweise als zylinderförmiger Kessel ausgebildet, sodass die Mischkammern einen jeweiligen Zylinderabschnitt ausbilden, in denen Rotoren zum Durchmischen der Mischung angeordnet sind. Der Klappsattel verschließt in dem geschlossenen Zustand den unten angeordneten Öffnungsbereich, durch den die Mischung nach dem Mischprozess und nach Öffnung nach unten herausfällt oder austritt. Die Mischung kann abhängig von der vorgegebenen Zusammensetzung als ein zusammenhängender Klumpen aus der Mischkammer austreten oder anteilsweise nach und nach in mehreren Teilen austreten.

Es ist eine Erkenntnis im Zusammenhang mit der vorliegenden Erfindung, dass bei einer Mischer-Entleerung, insbesondere bei klebenden Mischungen, eine gewisse Zeit benötigt wird, bis die Mischung aus der Mischkammer austreten kann. Konventionell wird eine solche Sattelöffnungszeit oder Entleerungszeit großzügig vorgegeben, sodass überwiegend sichergestellt ist, dass die Mischung die Mischkammer verlassen hat. Abhängig von der Mischung, die verarbeitet werden soll, wird zum Beispiel eine Öffnungszeit von 30 Sekunden, 40 Sekunden oder 60 Sekunden vorgegeben. Solche relativ langen Sattelöffnungszeiten sind als Vorsichtsmaßnahme vorgesehen, um zum Beispiel zu verhindern, dass Mischreste, die noch nicht vollständig aus der Mischkammer ausgetreten sind, teilweise im Sattelbereich kleben bleiben und bei voreiligen Schließen des Klappsattels gequetscht werden, ein vollständiges Schließen und Verriegeln verhindern und dadurch zeitintensive Produktionsausfälle erzeugen können.

Mittels der beschriebenen Mischvorrichtung ist, insbesondere automatisiert, eine Verbesserung einer Mischer-Entladezeit erzielbar. Vorgegeben längere Sattelöffnungszeiten können auf Basis der Überwachungseinheit als zu lang beurteilt und deutlich reduziert werden. Gemäß den oben erwähnten Zeiträumen kann zum Beispiel erkannt werden, dass eine Mischung bereits nach 10 Sekunden die Mischkammer verlassen hat. Optional können noch zum Beispiel noch zusätzliche 5 Sekunden abgewartet werden, sodass mit 15 Sekunden Öffnungszeit eine signifikante Zeitersparnis erreicht werden kann. Mittels der Mischvorrichtung kann demgemäß die nötige Öffnungszeit zum Austreten der Mischung aus der Mischkammer minimiert oder zumindest nutbringend reduziert werden. Leerzeiten, die nach erfolgtem Austreten der Mischung nicht mehr nötig sind, können vermieden und nachfolgende Mischprozesse frühzeitiger begonnen werden.

Gemäß einer Weiterbildung der Mischvorrichtung, umfasst die Sensorik einen Lichtsensor und/oder Helligkeitssensor, der den Öffnungsbereich der Mischkammer überwacht und dazu eingerichtet ist, ein Messsignal zu erfassen, das repräsentativ für eine Licht- oder Helligkeitsänderung ist. Eine Änderung des Lichts oder der Helligkeit erfolgt aufgrund der austretenden Mischung und kann mittels solcher Sensoren zuverlässig erfasst werden. Somit kann überwacht werden, wann der Entleerungsprozess beendet ist, und daraufhin kann der Klappsattel wieder geschlossen werden. Es kann zum Beispiel auch ein Zeitraum vorgegeben, der nach dem abgewartet werden soll, um zu überwachen ob nach Austreten der Mischung oder eines Anteils davon noch etwas nachfolgt. Mittels Überwachung des Öffnungsbereichs kann eine deutliche Zeitersparnis erzielt werden im Vergleich zu einem konventionellen System, bei dem ein besonders langer Zeitraum für den geöffneten Zustand vorgegeben ist.

Alternativ oder zusätzlich kann die Sensorik einen Sensor und eine Lichtschranke umfassen, die zumindest abschnittsweise in dem Öffnungsbereich der Mischkammer ausgebildet ist und die mit dem Sensor zusammenwirkt. Beim Austreten der Mischung wird die Lichtschranke unterbrochen und dies mittels des Sensors erfasst. Eine solche Lichtschranke kann mittels einer oder mehrerer Laserdioden eingerichtet sein. Es kann zum Beispiel eine Linie oder ein Streifen mittig im Öffnungsbereich vorgesehen sein. Vorzugsweise sind mehrere Lichtstreifen parallel oder kreuzend zueinander angeordnet und bilden eine Art Streifen- oder Kreuzgitter, das ein Durchtreten der Mischung zuverlässig erfasst. Ferner kann die Lichtschranke flächig eingerichtet sein, sodass sie zum Beispiel einen überwiegenden Abschnitt im Öffnungsbereich bedeckt.

Gemäß einer weiteren Weiterbildung der Mischvorrichtung, umfasst die Sensorik eine Videokamera, die den Öffnungsbereich der Mischkammer überwacht und ein Bildsignal des Öffnungsbereichs bereitstellt.

Außerdem kann die Mischvorrichtung eine Steuereinheit aufweisen oder mit einer solchen zusammenarbeiten. Die Steuereinheit ist dazu eingerichtet, eine Bewegung des Klappsattels zu steuern, und sie ist signaltechnisch mit der Überwachungseinheit gekoppelt, sodass ausgehend von einem geöffneten Zustand der Mischkammer und in Abhängigkeit von einem Messignal der Sensorik der Überwachungseinheit mittels der Steuereinheit ein Schließvorgang des Klappsattels einleitbar ist. Dies kann automatisiert durchgeführt werden und zum Beispiel auf einem Künstlichen-Intelligenz-Algorithmus basieren, sodass ein solches System fortwährend die Entleerungszeit für eine jeweilige Mischung erfassen und anpassen kann. Alternativ oder zusätzlich kann die Option einer manuellen Betätigung des Klappsattels vorgesehen sein, der dann zum Beispiel mittels Knopfdrucks geschlossen wird, wenn der Beobachter anhand der Videokamera erkennt, dass die Mischung bereits ausgetreten ist.

Gemäß einem weiteren Aspekt der Erfindung umfasst ein Verfahren zum Betreiben einer Ausgestaltung der zuvor beschriebenen Mischvorrichtung ein Mischen einer vorgegebenen Mischung in den Mischkammerabschnitten der Mischkammer. Die Mischung kann insbesondere als eine Kautschuk-Mischung zur Reifenherstellung eingerichtet sein. Das Verfahren umfasst weiter ein Öffnen der Mischkammer mittels Drehen des Klappsattels um die Drehachse und dadurch Freigeben des Öffnungsbereichs der Mischkammer zum Austreten der Mischung. Das Verfahren umfasst weiter ein Überwachen des Öffnungsbereichs der Mischkammer mittels der Überwachungseinheit und der zugehörigen Sensorik. Das Überwachen kann insbesondere mittels eines Lichtsensor, eines Helligkeitssensors, einer Lichtschranke und/oder einer Videokamera erfolgen. Das Verfahren ist insbesondere mittels der zuvor beschriebenen Mischvorrichtung durchführbar, sodass Eigenschaften und Merkmale der Mischvorrichtung auch für das Verfahren offenbart sind und umgekehrt.

Das Verfahren kann ferner ein Erfassen eines Messignals der Sensorik umfassen und nachfolgend ein Einleiten eines Schließvorgangs des Klappsattels in Abhängigkeit von dem erfassten Messignal. Das Einleiten des Schließvorgangs kann automatisiert und/oder manuell ausgeführt werden.

Das Einleiten des Schließvorgangs des Klappsattels kann zusätzlich in Abhängigkeit von einem vorgegebenen Zeit-Schwellenwert durchgeführt werden. Beispielsweise wird überwacht, ob die Mischung die Mischkammer vollständig oder zum Großteil verlassen hat, und zusätzlich kann ein Zeitraum von 5 oder 10 Sekunden vorgegeben werden, der nach dem detektierten Austreten der Mischung abgewartet wird, bevor der Schließvorgang eingeleitet wird.

Der Zeit-Schwellenwert kann ferner in Abhängigkeit von dem erfassten Messignal der Sensorik angepasst und für nachfolgende Mischprozesse gespeichert werden. Zum Beispiel wird eine Sattelöffnungszeit von 30 Sekunden für eine zugehörige Mischung vorgegeben. Durch die Überwachung wird festgestellt, dass die Mischung bereits nach 15 Sekunden die Mischkammer verlassen hat, sodass eine neue Sattelöffnungszeit von 15 Sekunden plus einen Zeitraum von 10 Sekunden vorgegeben wird. Nachfolgend kann mittels weiterer Überwachung für eine solche Mischung festgestellt werden, dass der Zeitraum von Sekunden zu groß gewählt ist, sodass dieser angepasst und beispielweise auf 5 Sekunden reduziert wird. Insgesamt kann sowohl die Sattelöffnungszeit und, sofern zusätzlich ein Zeit-Schwellenwert vorgegeben ist, auch dieser mittels der Mischvorrichtung und dem korrespondierenden Verfahren fortlaufend für eine jeweilige Mischung angepasst werden.

Im Folgenden sind Ausführungsbeispiele der Erfindung anhand schematischer Zeichnungen erläutert. Es zeigen:
- Figur 1: ein Ausführungsbeispiel einer Mischvorrichtung zum Verarbeiten einer Mischung,
- Figur 2: ein weiteres Ausführungsbeispiel einer Mischvorrichtung zum Verarbeiten einer Mischung, und
- Figur 3: ein Ablaufdiagramm für ein Verfahren zum Betreiben der Mischvorrichtung.

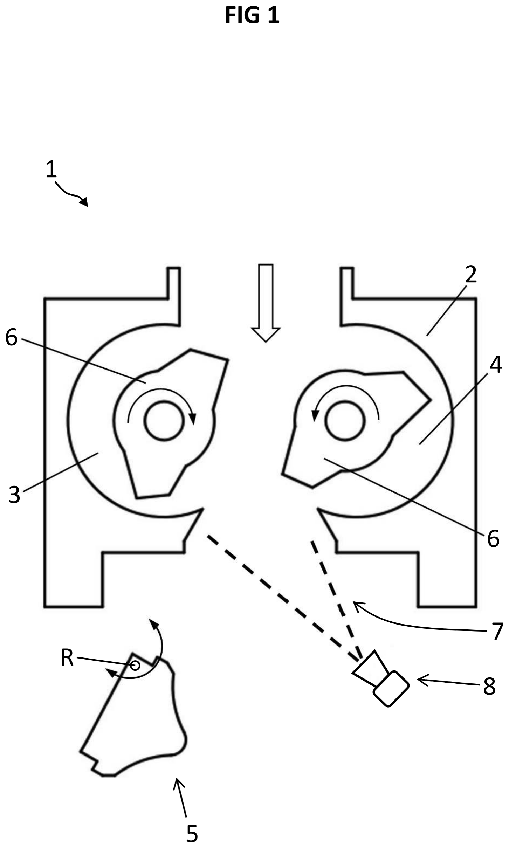

Figur 1 zeigt schematisch ein Ausführungsbeispiel einer Mischvorrichtung 1 zum Mischen und Verarbeiten einer Mischung, zum Beispiel einer Kautschuk-Mischung für Reifenherstellung. Die Mischvorrichtung 1 weist eine Mischkammer 2 mit einem ersten Mischkammerabschnitt 3und einem zweiten Mischkammerabschnitt 4 auf, die bei einem üblicherweise symmetrischen Aufbau auch als Mischkammerhälften bezeichnet werden können.

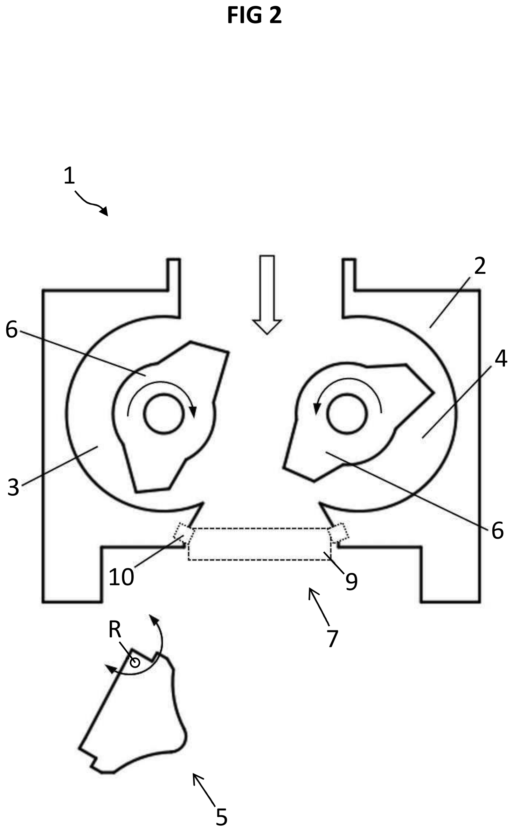

Die Mischvorrichtung 1 umfasst weiter einen Klappsattel 5, der mit der Mischkammer 2 gekoppelt ist und der um eine Drehachse R drehbar ausgebildet ist. Der Klappsattel 5 ist demgemäß zwischen einem geschlossenen Zustand und einem geöffneten Zustand überführbar. In dem geschlossenen Zustand richtet der Klappsattel 5 einen Bodenabschnitt der Mischkammer 2 ein und begrenzt einen jeweiligen Abschnitt der beiden Mischkammerhälften 3 und 4. In dem geöffneten Zustand ist ein Öffnungsbereich 7 der Mischkammer 2 zum Austreten der Mischung freigegeben. In den Figuren 1 und 2 ist die Öffnungsrichtung durch ein Pfeilsymbol angedeutet, dass von oben die zu verarbeitende Mischung oder ihre Bestandteile in die Mischkammer 2 hinzugefügt werden und durch zwei Rotoren 6 in den Mischkammerhälften 3 und 4 gemischt werden.

Der Klappsattel 5 umfasst ein Satteldach mit einem erhöhten Mittelbereich, das im Wesentlichen derart geformt, dass es eine Innenkontur der jeweiligen Mischkammerhälfte 3, 4 weiterführt. In den Mischkammerhälften 3, 4 sind die Mischrotoren 6 angeordnet, die die Mischung durchwälzen. Entsprechend sind die Mischkammerhälften 3, 4 im Wesentlichen zylinderförmig ausgebildet und weisen in Projektionen einen Überlappungsbereich auf.

Die Mischvorrichtung 1 umfasst außerdem eine Überwachungseinheit mit einer Sensorik, die dazu eingerichtet ist, den Öffnungsbereich 7 der Mischkammer 2 in dem geöffneten Zustand des Klappsattels 5 zu überwachen. Gemäß dem Ausführungsbeispiel nach Figur 1 umfasst die Sensorik eine Videokamera 8, die den Öffnungsbereich 7 der Mischkammer 2 überwacht und ein Bildsignal des Öffnungsbereichs 7 bereitstellt. Der Aufnahmebereich der Videokamera 8 ist durch gestrichelte Linien angedeutet.

Mittels der Überwachungseinheit und der Videokamera 8 kann auf einfache und zuverlässige Weise beobachtet werden, wann die verarbeitete Mischung nach unten austritt und die Mischkammer 2 verlässt. Daraufhin kann ein Schließvorgang eingeleitet werden, sodass der Klappsattel 5 vom geöffneten Zustand in den geschlossenen Zustand überführt wird. Es somit nicht erforderlich eine überdurchschnittlich lange Öffnungszeit abzuwarten, die häufig viel zu lang vorgegeben ist und daher die Prozessdauer und die Kosten für Mischungen erhöht.

Die Figur 2 zeigt ein weiteres Ausführungsbeispiel der Mischvorrichtung 1, bei der die Sensorik der Überwachungseinheit eine Lichtschranke 9 und einen Sensor 10 umfasst, der mit der Lichtschranke 9 zusammenwirkt. Bei einem Unterbrechen der Lichtschranke 9 aufgrund des Durchtretens der Mischung aus der Mischkammer 2 wird dies mit dem Sensor 10 erfasst und es kann darauf basierend ein Schließvorgang eingeleitet werden. Gegebenenfalls kann nach der erfassten Unterbrechung der Lichtschranke 9 ein vorgegebener Zeitraum von zum Beispiel 3 oder 5 Sekunden abgewartet werden, um zu kontrollieren, ob noch Anteile der Mischung nachfallen. Daraufhin kann ein Schließvorgang des Klappsattels 5 eingeleitet werden. Die Lichtschranke 9 kann als eine Linie oder ein Streifen im Bereich des Öffnungsbereich 7 eingerichtet sein, oder mehrere Linien oder Streifen umfassen, die ein Linien- oder Kreuzgitter einrichten. Alternativ kann die Lichtschranke 9 flächig eingerichtet sein und den Öffnungsbereich 7 teilweise oder vollständig ausfüllen.

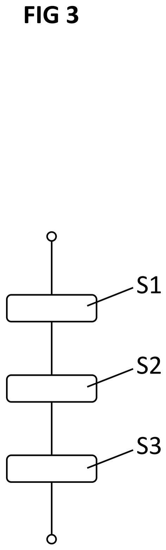

Ein Ablaufdiagramm für ein Verfahren zum Betreiben der Mischvorrichtung 1 kann gemäß Figur 3 wie folgt durchgeführt werden.

In einem Schritt S1 wird eine vorgegebene Mischung von oben in die Mischkammer 2 eingeführt und mittels der Rotoren 6 in den Mischkammerabschnitten 3 und 4 gemischt.

In einem Schritt S2 wird die Mischkammer 2 geöffnet, indem der Klappsattel 5 um die Drehachse R gedreht wird. Nachdem der Öffnungsbereich 7 der Mischkammer 2 freigegeben ist, kann die verarbeitete Mischung aus der Mischkammer 2 nach unten austreten.

In einem Schritt S3 wird der geöffnete Öffnungsbereich 7 mittels der Videokamera 8 und/der mittels der Lichtschranke 9 und dem Sensor 10 überwacht und das Austreten der Mischung aus der Mischkammer 2 beobachtet. Daraufhin kann, automatisiert und/oder manuell, zeitnah der Schließvorgang des Klappsattels 5 eingeleitet werden, sodass ohne große Verzögerung die nächste Mischung in der Mischvorrichtung 1 verarbeitet werden kann.

### Bezugszeichenliste

- 1: Mischvorrichtung
- 2: Mischkammer
- 3: erster Mischkammerabschnitt
- 4: zweiter Mischkammerabschnitt
- 5: Klappsattel
- 6: Rotor
- 7: Öffnungsbereich der Mischkammer
- 8: Videokamera
- 9: Lichtschranke
- 10: Sensor / Lichtsensor / Helligkeitssensor

- R: Drehachse des Klappsattels
- S(i): Schritte eines Verfahrens zum Betreiben einer Mischvorrichtung

## Patentansprüche

1. Mischvorrichtung (1) zum Mischen und Verarbeiten einer Mischung, aufweisend:
- eine Mischkammer (2) mit einem ersten Mischkammerabschnitt (3) und einem zweiten Mischkammerabschnitt (4),
- einen Klappsattel (5), der mit der Mischkammer (2) gekoppelt ist und der um eine Drehachse (R) drehbar ausgebildet ist, sodass der Klappsattel (5) in einem geschlossenen Zustand einen Bodenabschnitt der Mischkammer (2) einrichtet und die beiden Mischkammerabschnitte (3, 4) abschnittsweise begrenzt, und in einem geöffneten Zustand einen Öffnungsbereich (7) der Mischkammer (2) zum Austreten der Mischung freigibt, und
- eine Überwachungseinheit mit einer Sensorik (8, 9, 10), die dazu eingerichtet ist, den Öffnungsbereich (7) der Mischkammer (2) in dem geöffneten Zustand des Klappsattels (5) zu überwachen.

2. Mischvorrichtung (1) nach Anspruch 1, bei der die Sensorik einen Lichtsensor (10) und/oder Helligkeitssensor (10) umfasst, der den Öffnungsbereich (7) der Mischkammer (2) überwacht und dazu eingerichtet ist, ein Messsignal zu erfassen, das repräsentativ für eine Licht- oder Helligkeitsänderung ist.

3. Mischvorrichtung (1) nach einem der vorhergehenden Ansprüche, bei der die Sensorik einen Sensor (10) und eine Lichtschranke (9) umfasst, die zumindest abschnittsweise in dem Öffnungsbereich (7) der Mischkammer (2) ausgebildet ist und mit dem Sensor (10) zusammenwirkt, sodass ein Unterbrechen der Lichtschranke (9) mittels des Sensors (10) erfassbar ist.

4. Mischvorrichtung (1) nach einem der vorhergehenden Ansprüche, bei der die Sensorik eine Videokamera (8) umfasst, die den Öffnungsbereich (7) der Mischkammer (2) überwacht und ein Bildsignal des Öffnungsbereichs (7) bereitstellt.

5. Mischvorrichtung (1) nach einem der vorhergehenden Ansprüche, aufweisend:
eine Steuereinheit, die dazu eingerichtet ist, eine Bewegung des Klappsattels (5) zu steuern, und die signaltechnisch mit der Überwachungseinheit gekoppelt ist, sodass ausgehend von einem geöffneten Zustand der Mischkammer (2) und in Abhängigkeit von einem Messignal der Sensorik (8, 9, 10) der Überwachungseinheit mittels der Steuereinheit ein Schließvorgang des Klappsattels (5) einleitbar ist.

6. Verfahren zum Betreiben einer Mischvorrichtung (1) nach einem der vorhergehenden Ansprüche, umfassend:
- Mischen einer vorgegebenen Mischung in den Mischkammerabschnitten (3, 4) der Mischkammer (2),
- Öffnen der Mischkammer (2) mittels Drehen des Klappsattels (5) um die Drehachse (R) und dadurch Freigeben des Öffnungsbereichs (7) der Mischkammer (2) zum Austreten der Mischung, und
- Überwachen des Öffnungsbereichs (7) der Mischkammer (2) mittels der Überwachungseinheit und der zugehörigen Sensorik (8, 9, 10).

7. Verfahren nach Anspruch 6, bei dem die Sensorik einen Lichtsensor (10), Helligkeitssensor (10), eine Lichtschranke (9) und/oder eine Videokamera (8) umfasst, mittels dessen oder mittels derer der Öffnungsbereichs (7) der Mischkammer (2) in dem geöffneten Zustand überwacht wird.

8. Verfahren nach Anspruch 6 oder 7, umfassend:
- Erfassen eines Messignals der Sensorik (8, 9, 10) der Überwachungseinheit, und
- Einleiten eines Schließvorgangs des Klappsattels (5) in Abhängigkeit von dem erfassten Messignal, wobei das Einleiten des Schließvorgangs automatisiert und/oder manuell ausführbar ist.

9. Verfahren nach Anspruch 8, bei dem das Einleiten des Schließvorgangs des Klappsattels (5) zudem in Abhängigkeit von einem vorgegebenen Zeit-Schwellenwert durchgeführt wird.

10. Verfahren nach Anspruch 9, bei dem der Zeit-Schwellenwert in Abhängigkeit von dem erfassten Messignal der Sensorik (8, 9, 10) angepasst und für nachfolgende Mischprozesse gespeichert wird.
